# EUROPÄISCHE PATENTSCHRIFT

(11) **EP 3 727 961 B1**
(45) Veröffentlichungstag und Bekanntmachung des Hinweises auf die Patenterteilung: **05.01.2022**
(21) Anmeldenummer: 18808267.1
(22) Anmeldetag: 20.11.2018
(51) Int. Cl.: B60S 3/04, B60W 30/06, G05D 1/02

(54) **WASCHVERFAHREN FÜR EIN KRAFTFAHRZEUG, WASCHANLAGE UND KRAFTFAHRZEUG ZUM DURCHFÜHREN DES WASCHVERFAHRENS**
WASHING METHOD FOR A MOTOR VEHICLE, WASHING INSTALLATION AND MOTOR VEHICLE FOR CARRYING OUT THE WASHING METHOD
PROCÉDÉ DE LAVAGE POUR UN VÉHICULE À MOTEUR, INSTALLATION DE LAVAGE ET VÉHICULE À MOTEUR POUR L'EXÉCUTION DU PROCÉDÉ DE LAVAGE

(30) Priorität: 18.12.2017 DE 102017223109
(43) Veröffentlichungstag der Anmeldung: 28.10.2020
(73) Patentinhaber: VOLKSWAGEN AKTIENGESELLSCHAFT, 38440 Wolfsburg (DE)
(72) Erfinder: KARRENBERG, Simon, 38104 Braunschweig (DE); STOCK, Gregor, 38448 Wolfsburg (DE)
(86) Internationale Anmeldenummer: PCT/EP2018/081866
(87) Internationale Veröffentlichungsnummer: WO 2019/120825

(56) Entgegenhaltungen:
- EP-A2- 2 698 293
- DE-A1-102014 221 763
- DE-A1-102014 224 124
- DE-A1-102015 212 252
- US-A1- 2018 339 703

## Beschreibung

Die Erfindung betrifft ein Waschverfahren für ein Kraftfahrzeug.

Zum vollautonomen Ein- und Ausfahren eines Kraftfahrzeugs in eine beziehungsweise aus einer Fahrzeugwaschanlage oder Fahrzeugwaschstraße wurden bereits verschiedene Verfahren entwickelt.

In der DE 10 2013 215 195 A1 wird ein Verfahren zum kameragestützten Einfahren in beziehungsweise Ausfahren aus einer Fahrzeugwaschanlage mit einem Fahrzeug beschrieben. Hierbei werden zur Orientierung des Kraftfahrzeugs von einer Kameraeinheit des Kraftfahrzeugs Einfahrspuren für die Fahrzeugräder im Einfahrbereich der Fahrzeugwaschanlage sowie entsprechende Ampelsignale der Waschanlage erkannt und zur autonomen Steuerung des Kraftfahrzeugs in die Waschanlage hinein beziehungsweise aus dieser heraus benutzt.

In der DE 10 2012 016 432 B4 wird zudem ein Verfahren zum autonomen Fahren eines Kraftfahrzeugs in einer Waschstraße beschrieben. Hierfür erfolgt zunächst eine Verortung des Kraftfahrzeugs relativ zu dem Korridor der Waschstraße mithilfe von fest platzierten Orientierungselementen sowie mithilfe von Sensordaten von vorbestimmten Fahrerassistenzsysteme. Gemäß diesem Verfahren fährt ein Fahrzeug vollautonom zu einer vorgegebenen Position innerhalb der Waschstraße, schaltet dort den Motor des Kraftfahrzeugs ab und ein Wasch- beziehungsweise Trockenschritt des Kraftfahrzeugs beginnt. Es ist zudem möglich, dass der Wasch- und Trockenschritt des Kraftfahrzeugs an verschiedenen Positionen stattfindet und das Fahrzeug, nachdem es beispielsweise gewaschen wurde, vollautonom von der Waschposition zur Trockenposition fährt. Sobald es die Trockenposition erreicht, wird der Motor des Kraftfahrzeugs jedoch wieder abgeschaltet. Während des Waschens und Trocknens des Kraftfahrzeugs wird das Fahrzeug nicht vollautonom gesteuert, sondern jegliche Bewegung im Rahmen des Waschens und Trocknens wird von Elementen der Waschstraße ausgeführt.

Des Weiteren wird in der DE 10 2014 224 124 A1 ein Verfahren zum Betreiben eines Kraftfahrzeugs beschrieben, wobei sich das Fahrzeug nach Ankunft auf einer befahrbaren Infrastruktur bei einem Infrastrukturverwaltungsserver für eine Fahrt auf der Infrastruktur anmeldet. Daraufhin empfängt das Fahrzeug von dem Infrastrukturverwaltungsserver die für eine Fahrt auf der Infrastruktur relevanten Daten, basierend auf welchen das Fahrzeug auf der Infrastruktur von einer Startposition zu einer Zielposition vollautonom fährt. EP 2 698 293 A2 offenbart den nächsten Stand der Technik.

Es ist die Aufgabe der Erfindung, eine Lösung bereitzustellen, mittels welcher ein Kraftfahrzeug, das einen vollautonomen Fahrvorgang durchführen kann, mit besonders geringem Aufwand gewaschen werden kann.

Diese Aufgabe wird durch ein Waschverfahren für ein Kraftfahrzeug, eine Waschanlage zum Durchführen eines solchen Waschverfahrens sowie ein Kraftfahrzeug, das dazu ausgelegt ist, ein derartiges Waschverfahren in einer derartigen Waschanlage durchzuführen, gelöst. Das erfindungsgemäße Waschverfahren für ein Kraftfahrzeug umfasst die folgenden Schritte: Übermitteln von einen Waschvorgang des Kraftfahrzeugs betreffenden Daten an eine Waschanlagensteuereinheit einer Waschanlage mit zumindest einem Waschanlagenportal, Ermitteln einer Bewegungsroutine für das Kraftfahrzeug basierend auf den übermittelten Daten, wobei die Bewegungsroutine zumindest Vor- und/oder Rückwärtsbewegungen des Kraftfahrzeugs relativ zu der Waschanlage für den Waschvorgang umfasst, sowie Durchführen des Waschvorgangs, indem das Kraftfahrzeug die ermittelte Bewegungsroutine automatisch ausführt und die Waschanlage abgestimmt auf die Bewegungsroutine das Kraftfahrzeug mittels des Waschanlagenportals wäscht. Erfindungsgemäß wird also ein Verfahren zum Reinigen eines Kraftfahrzeugs vorgestellt. Im Rahmen dieses Verfahrens werden zunächst Daten, die für das Waschen des Kraftfahrzeugs relevante Informationen enthalten, von einer entsprechenden Steuereinheit des Kraftfahrzeugs an eine entsprechende Steuereinheit der Waschanlage, das heißt an die Waschanlagensteuereinheit, gesendet. Diese Waschanlagensteuereinheit bestimmt daraufhin Bewegungsabläufe einer Waschroutine für das Kraftfahrzeug unter Berücksichtigung der zuvor vom Kraftfahrzeug an die Waschanlagensteuereinheit übermittelten Daten. Die hierbei bestimmte Bewegungsroutine umfasst wenigstens Bewegungen des Kraftfahrzeugs entlang der Achse der Längsausdehnung des Kraftfahrzeugs.

Alternativ dazu ist es auch möglich, dass die Steuereinheit des Kraftfahrzeugs die Bewegungsroutine für das Kraftfahrzeug bestimmt. Hierfür werden die der Steuereinheit des Kraftfahrzeugs vorliegenden, den Waschvorgang des Kraftfahrzeugs betreffende Daten sowie weitere von der Waschanlagensteuereinheit übermittelte Daten berücksichtigt, die Informationen über die einzelnen zum Waschen und/oder Trocknen ausgelegten Komponenten der Waschanlage und deren Bewegungsroutinen im Rahmen eines vorbestimmten Waschvorgang betreffen. Der vorbestimmte Waschvorgang für das Kraftfahrzeug wird der Waschanlagensteuereinheit zuvor von der Steuereinheit des Kraftfahrzeugs mitgeteilt, so dass nur die zur Bestimmung einer Bewegungsroutine für diesen Waschvorgang benötigten Daten an die Steuereinheit des Kraftfahrzeugs übermittelt werden.

Nachdem die Bewegungsroutine an sie Steuereinheit des Kraftfahrzeugs übermittelt oder von dieser bestimmt wurde, erfolgt das Durchführen des Waschvorgangs, und zwar indem das Kraftfahrzeug die zuvor bestimmte Bewegungsroutine selbstständig, das heißt ohne Eingriffe eines Fahrers des Kraftfahrzeugs, durchführt. Während das Kraftfahrzeug diese Bewegungsroutine durchführt, führt die Waschanlage mittels des Waschanlagenportals, in dem sich das Kraftfahrzeug befindet, die entsprechenden, zur Bewegungsroutine gehörenden Waschschritte durch.

Befindet sich beispielsweise ein vollautomatisch steuerbares Kraftfahrzeug vor einer Waschanlage, übermittelt dieses Kraftfahrzeug zunächst den Waschvorgang des Kraftfahrzeugs betreffende Daten an die Waschanlagensteuereinheit. Basierend auf diesen Daten ermittelt diese daraufhin, welche Bewegung das Kraftfahrzeug während des geplanten zukünftigen Waschvorgangs des Kraftfahrzeugs durchführen muss. Daraufhin wird diese Bewegungsroutine vom Kraftfahrzeug durchgeführt, das heißt das Kraftfahrzeug fährt zunächst vollautonom in das Waschportal ein, fährt dann derart vor und zurück, dass es besonders vorteilhaft von den einzelnen zum Waschen des Kraftfahrzeugs vorgesehenen Komponenten des Waschportals gereinigt wird und fährt zudem nach Beenden des Waschvorgangs vollautonom aus der Waschanlage heraus. Die Waschanlagensteuereinheit übermittelt somit dem Kraftfahrzeug alle für einen Waschvorgang des Kraftfahrzeugs relevanten Bewegungsdaten. Zusätzlich zu einer Vor- und/oder Rückwärtsbewegung des Kraftfahrzeugs relativ zu der Waschanlage ist zudem eine Quersteuerung des Kraftfahrzeugs durch entsprechendes Rangieren des Kraftfahrzeugs möglich.

Da das Kraftfahrzeug während des Waschverfahrens vollautonom fährt, ist es nicht nötig, dass ein Fahrer des Kraftfahrzeugs oder ein Operator der Waschanlage sich vor Ort befinden. Es ist somit mit diesem Waschverfahren möglich, dass von der Steuereinheit eines Flottenbetreibers einzelne Kraftfahrzeuge dieser Flotte zu der Waschanlage mit dem zumindest einen Waschanlagenportal geschickt werden und dort die jeweiligen Kraftfahrzeuge vollautonom gesteuert gemäß dem erfindungsgemäßen Verfahren von der Waschanlage gereinigt werden.

In weiterer vorteilhafter Ausgestaltung der Erfindung ist es vorgesehen, dass während der Durchführung des Waschvorgangs das Waschanlagenportal ortsfest verbleibt. Es ist also vorgesehen, dass sich das Waschanlagenportal selbst nicht entlang der Längsachse des Kraftfahrzeugs bewegt. Jegliche Vorwärts- und Rückwärtsbewegung des Kraftfahrzeugs in Richtung der Bürsten und anderer Elemente des Waschanlagenportals werden also vollautonom von dem Kraftfahrzeug durchgeführt. Das Waschanlagenportal bewegt sich mit seinen Waschanlagenportalkomponenten lediglich auf der Ebene, die durch Quer- und Hochachse des Kraftfahrzeugs aufgespannt wird. Es ist also weiterhin vorgesehen, wie in Waschanlagen üblich, dass sich die einzelnen Bürsten, Lappen und andere Elemente des Waschanlagenportals während des Waschens des Kraftfahrzeugs auf dieses zu beziehungsweise von diesem weg bewegen. Es ist allerdings nicht mehr nötig, dass das Waschanlagenportal in Richtung der Längsausdehnung des Kraftfahrzeugs beweglich ist oder dass das Kraftfahrzeug auf dem Fließband einer Fahrstraße durch eine Waschstraße bewegt wird, da der Waschvorgang durch das vollautonome Steuern des Kraftfahrzeugs gemäß der ermittelten Bewegungsroutine unterstützt wird. Dies ermöglicht das Verwenden von deutlich weniger komplexen Waschanlagen oder Waschstraßen zum Waschen eines Kraftfahrzeugs als es bisher üblich ist, da die Waschanlage beziehungsweise Waschstraße selbst keine Bewegungen mehr entlang der Längsachse des Kraftfahrzeugs durchführen beziehungsweise das Kraftfahrzeug nicht mehr entlang der Waschstraße, beispielsweise mithilfe einer entsprechenden Fördereinrichtung, bewegen muss.

In weiterer vorteilhafter Ausgestaltung der Erfindung ist es vorgesehen, dass während der Durchführung des Waschvorgangs anhand von Sensordaten des Kraftfahrzeugs und/oder anhand von Sensordaten der Waschanlage eine Relativpositionierung des Kraftfahrzeugs zum Waschanlagenportal überprüft wird. Während das Kraftfahrzeug von den entsprechenden Komponenten des Waschanlagenportals gewaschen wird, wird also die Verortung des Kraftfahrzeugs relativ zum Waschanlagenportal kontrolliert, indem Daten entsprechender Sensoreinheiten des Kraftfahrzeugs und/oder der Waschanlage hinzugezogen werden. Bei den Sensordaten des Kraftfahrzeugs handelt es sich beispielsweise um Radar- und/oder Ultraschalldaten, die von entsprechenden Sensoreinheiten des Kraftfahrzeugs bereitgestellt werden. Bei den Sensordaten der Waschanlage handelt es sich beispielsweise um Daten von Berührungsbügeln oder Kontaktschaltern sowie von Lichtschranken, die innerhalb des Waschanlagenportals installiert sind. Es ist zudem denkbar, dass Kameras außerhalb des Waschanlagenportals installiert werden und den Waschprozess des Kraftfahrzeugs aufnehmen sowie den Endzustand des Kraftfahrzeugs nach dem Waschvorgang dokumentieren. Anhand der Daten dieser Sensoreinheiten ist also eine möglichst präzise Verortung des Kraftfahrzeugs bezogen auf das Waschanlagenportal möglich, auf deren Basis festgestellt werden kann, ob das Kraftfahrzeug die Bewegungsroutine für den Waschvorgang des Kraftfahrzeugs korrekt durchführt. Hierdurch kann bereits während des Waschvorgangs registriert werden, ob es zu Komplikationen während des Waschvorgangs und somit zu einem potentiell unvorteilhaften denn nicht dem gewünschten Endzustand des Kraftfahrzeugs entsprechenden Ergebnis des Waschvorgangs kommen könnte.

In weiterer vorteilhafter Ausgestaltung der Erfindung ist es vorgesehen, dass die Relativpositionierung durch eine Längs- und/oder Quersteuerung des Kraftfahrzeugs automatisch korrigiert wird, falls die Relativpositionierung des Kraftfahrzeugs von einer Soll-Vorgabe abweicht. Deutet das Ergebnis der Verortung des Kraftfahrzeugs in der Waschanlage also darauf hin, dass sich das Kraftfahrzeug nicht dort befindet, wo es gemäß der ermittelten Bewegungsroutine positioniert sein sollte, erfolgt eine Korrektur der Position des Kraftfahrzeugs durch eine entsprechende Steuerung der Längs- und/oder Querachse des Kraftfahrzeugs, was von dem Kraftfahrzeug selbstständig, das heißt in einem automatischen Fahrvorgang, erfolgt.

Kam es beispielsweise nach mehrmaligem Vor- und Zurückfahren des Kraftfahrzeugs gemäß der Bewegungsroutine innerhalb des Waschanlagenportals zu einer Abweichung der aktuellen Relativpositionierung des Kraftfahrzeugs in Bezug auf die Soll-Vorgabe, zum Beispiel bedingt durch ein Rutschen des Kraftfahrzeugs auf dem mit Seifenwasser bedeckten Boden des Waschanlagenportals, kann die Relativpositionierung des Kraftfahrzeugs korrigiert werden. Hierfür wird die Längs- oder Quersteuerung des Kraftfahrzeugs dementsprechend vollautomatisch angesteuert, um das Kraftfahrzeug in die gewünschte Soll-Position zu führen. Insbesondere bei Kraftfahrzeugen mit einem Elektromotor ist eine solch genaue Positionierung und Steuerung des Kraftfahrzeugs in Längs- und Querrichtung relativ leicht technisch zu realisieren, da die Übertragung einer am Elektromotor angelegten Spannung auf die Bewegung der Räder relativ klar definiert ist. In einem Kraftfahrzeug mit Elektromotor besteht nämlich, anders als bei einem Kraftfahrzeug mit einem Verbrennungsmotor, eine starre Übersetzung von Motorumdrehungen zu Radumdrehungen. Falls in der Motorsteuerung des Kraftfahrzeugs eine Sensorik zur Bestimmung der Rotorposition verbaut ist, kann diese zur Bestimmung der Drehwinkel der angetriebenen Räder genutzt werden. Je nach Übersetzung ist dann bekannt, wie viele Umdrehungen des Rotors im Elektromotor, welcher Fahrstrecke des Kraftfahrzeugs entsprechen. Beispielsweise können bei entsprechender Übersetzung zehn Umdrehungen des Rotors im Elektromotor einer Fahrstrecke von 2 cm entsprechen.

Während des Durchführens der Bewegungsroutine, das heißt während des Waschvorgangs, kann also kontinuierlich überprüft werden, ob sich das Kraftfahrzeug in einer gewünschten Position befindet und somit die Bewegungsroutine, wie sie von der Waschanlagensteuereinheit ermittelt wurde, durchführt. Abweichungen von dieser Bewegungsroutine in Form von Abweichungen der Relativpositionierung des Kraftfahrzeugs können daraufhin relativ zeitnah und präzise durch ein entsprechendes Ansteuern des Kraftfahrzeugs korrigiert werden. Hierdurch kann garantiert werden, dass durch den Waschvorgang gemäß der Bewegungsroutine tatsächlich das dem gewünschten Endzustand des Kraftfahrzeugs entsprechende Ergebnis des Waschvorgangs erzielt wird.

In weiterer vorteilhafter Ausgestaltung der Erfindung ist es vorgesehen, dass die Relativpositionierung in Querrichtung mittels einer Komponente des Waschanlagenportals korrigiert wird, falls die Relativposition des Kraftfahrzeugs von der Soll-Vorgabe abweicht. Jegliche Positionierungsabweichung des Kraftfahrzeugs, die nicht in Längsrichtung des Kraftfahrzeugs aufgetreten sind, können somit auch durch einen dafür ausgelegten Teil des Waschanlagenportals derart korrigiert werden, dass die Relativposition des Kraftfahrzeugs wieder der Soll-Vorgabe gemäß der Bewegungsroutine für das Kraftfahrzeug entspricht. Eine solche Beeinflussung der Relativpositionierung in Querrichtung durch Komponenten des Waschanlagenportals ist zum Beispiel dadurch möglich, dass die Bürsten derart gesteuert werden, dass diese mit einem relativ kleinen Druck auf eine der beiden Seitenwände des Kraftfahrzeugs drücken und dadurch das Kraftfahrzeug in die gewünschte Soll-Position schieben. Alternativ ist es möglich, dass dafür vorgesehene Abstandsregelelemente in das Waschanlagenportal integriert sind, beispielsweise in Form von fest installierten Rollen, die ebenfalls einen vorbestimmten Druck auf die entsprechende Seitenwand des Kraftfahrzeugs ausüben und dadurch das Kraftfahrzeug relativ sacht in die gewünschte Soll-Position schieben. Das an sich ortsfeste Waschanlagenportal kann somit in Querrichtung des Kraftfahrzeugs in die Relativpositionierung des Kraftfahrzeugs eingreifen und somit, zusätzlich zu den einzelnen von den entsprechenden Komponenten des Waschanlagenportals durchgeführten Wasch- und Trockenschritten, unterstützend in die Durchführung des Waschvorgangs gemäß der Bewegungsroutine eingreifen.

In weiterer vorteilhafter Ausgestaltung der Erfindung ist es vorgesehen, dass die übermittelten Daten wenigstens eine der vorliegenden Informationen umfassen: Abmessungen des Kraftfahrzeug, Informationen zur Lackierung des Kraftfahrzeugs, Informationen zu einem ausgewählten Waschprogramm und Informationen zu einem gewünschten Start des Vorgangs. Die vor der Ermittlung der Bewegungsroutine und dem Beginn des eigentlichen Waschvorgangs von dem Kraftfahrzeug an die Waschanlagensteuereinheit übermittelten Daten enthalten also Details zu den folgenden das Kraftfahrzeug und den Waschvorgang betreffenden Dingen: Zum einen enthalten sie Details dazu, wie groß das Kraftfahrzeug ist und wo sich welche Kraftfahrzeugkomponenten befinden, also zum Beispiel dazu wo sich Außenspiegel oder Griffe der Fahrzeugtüren befinden. Zudem enthalten die Daten Details zu der Art des Lacks, der verwendet wurde, um das Kraftfahrzeug zu lackieren. Des Weiteren enthalten die Daten Informationen darüber, welche Art von Fahrzeugwäsche gewünscht ist, also welches Waschprogramm für das Kraftfahrzeug vorgesehen ist, sowie Details dazu, wann die Kraftfahrzeugwäsche beginnen soll. Die übermittelten Daten umfassen entweder eine der aufgezählten Arten von Informationen oder mehrere dieser Informationen.

Die Abmessung des Kraftfahrzeugs sowie die Information zur Lackierung des Kraftfahrzeugs helfen bei der Ermittlung der Bewegungsroutine des Kraftfahrzeugs durch die Waschanlagensteuereinheit, da diese somit sowohl die genauen Maße und Ausführungsdetails des Kraftfahrzeugs als auch dessen Oberflächenbeschaffenheit berücksichtigen kann. Durch entsprechende Wahl eines Waschprogramms sowie in Kombination mit den Informationen zur Abmessung und Lackierung des Kraftfahrzeugs ist es zudem möglich, ein besonders ressourcensparsames Waschprogramm für das Kraftfahrzeug zu ermitteln, indem beispielsweise der Verbrauch an Wasser so gering wie möglich gewählt wird.

Zusätzlich können die übermittelten Daten auch für jeden Punkt der Fahrzeugoberfläche Informationen dazu enthalten, welche Chemikalien, Anpressdrücke der Bürsten und Wasserdrücke geeignet sind. Basierend auf diesen Daten kann beispielsweise die Mitte der Frontscheibe mit höherem Wasserdruck behandelt werden als eine Türdichtung oder es können die Bereiche der Scheiben von der Beschichtung des Kraftfahrzeugs mit Wachs ausgenommen werden. Der Waschvorgang kann also nicht nur auf die unterschiedlichen Fahrzeugmodelle, sondern auch auf verschiedene Zonen des Kraftfahrzeugs angepasst werden.

Mithilfe der Information zu einem gewünschten Start des Vorgangs lässt es sich zudem vermeiden, dass, wenn mehrere Kraftfahrzeuge dafür vorgesehen sind, von der Waschanlage gewaschen zu werden, zu einem bestimmten Zeitpunkt ein Kraftfahrzeug gereinigt wird, dass zu diesem Zeitpunkt noch nicht zum Waschen vorgesehen ist. Sind beispielsweise zwei Kraftfahrzeuge einer Fahrzeugflotte dafür vorgesehen, von der Waschanlage gereinigt zu werden, jedoch Kraftfahrzeug A vor Kraftfahrzeug B an der Waschanlage eintrifft, allerdings zunächst Kraftfahrzeug B für eine Reinigung vorgesehen ist, zum Beispiel weil Kraftfahrzeug B vor Kraftfahrzeug A wieder für einen Einsatz eingeplant ist, kann die Waschanlagensteuereinheit anhand der übermittelten Startzeitpunkte das Kraftfahrzeug identifizieren, das als erstes von den beiden gewaschen werden soll. Für dieses Kraftfahrzeug, in diesem Fall für das Kraftfahrzeug B, wird von der Waschanlagensteuereinheit zunächst eine Bewegungsroutine ermittelt und die entsprechenden Signale für den Beginn eines Waschvorgangs an dieses Kraftfahrzeug übersendet. Bei unterschiedlichen Anbietern oder Betreibern der Kraftfahrzeuge A und B wäre es zudem denkbar, dass die Reihenfolge, in der die beiden Kraftfahrzeuge gewaschen werden, in einem Priorisierungsprozess ermittelt wird, beispielsweise in Abhängigkeit vom Preis der Fahrzeugwäsche oder dem Ergebnis eines entsprechenden Aushandlungsprozesses zwischen den Anbietern oder Betreibern und dem Betreiber der Waschanlage, wie beispielsweise einer Auktion.

In weiterer vorteilhafter Ausgestaltung der Erfindung ist es vorgesehen, dass die ermittelte Bewegungsroutine in Teilbewegungsroutinen aufgeteilt wird und die jeweiligen Teilbewegungsroutinen erst vor Beginn der Durchführung des entsprechenden jeweiligen Teilabschnitts des Waschvorgangs an das Kraftfahrzeug übermittelt werden. Es ist somit möglich, dass die Waschanlagensteuereinheit die ermittelte Bewegungsroutine in einzelne Abschnitte unterteilt. Kurz vor dem jeweiligen Start der Durchführung der einzelnen Abschnitte des Waschvorgangs wird die Bewegungsroutine, die den entsprechenden Abschnitt betrifft, an das Kraftfahrzeug gesendet. Hierdurch ist es möglich, dass die Waschanlagensteuereinheit durch entsprechende Anpassung der Teilbewegungsroutinen auf mögliche Änderung der Relativpositionierung des Kraftfahrzeugs zum Waschanlagenportal reagiert und somit zu verschiedenen Zeitpunkten des Waschvorgangs eine aktualisierte Teilbewegungsroutine an das Kraftfahrzeug übermittelt.

Alternativ dazu ist es auch möglich, dass die Waschanlagensteuereinheit die Bewegungsroutine vor Beginn des Waschvorgangs als eine Datei an das Kraftfahrzeug übermittelt. Jegliche Korrekturen der Relativpositionierung des Kraftfahrzeugs zum Waschanlagenportal erfolgen daraufhin unabhängig von dem eigentlichen Ablauf der Bewegungsroutine. Während dieser Korrekturen der Relativpositionierung, das heißt während der relativ kurzen Zeiträume, in denen diese Korrekturen erfolgen, wird die Bewegungsroutine dann unterbrochen und erst dann wieder fortgesetzt, wenn die Relativpositionierung der Soll-Vorgabe entspricht. Alternativ kann die Bewegungsroutine auch während des Waschvorgangs hinsichtlich eines gewünschten Endzustands des Kraftfahrzeugs angepasst werden. Bei einem solchen adaptiven Vorgehen wird beispielsweise die Anzahl der Vor- und Zurückbewegungen des Kraftfahrzeugs innerhalb des Waschanlagenportals in Abhängigkeit eines beispielsweise mithilfe einer Kamera der Waschanlage erfassten aktuellen Zustands des Kraftfahrzeugs so lange erhöht, bis der gewünschte Endzustand erreicht ist. Die entsprechenden Anpassungen der Bewegungsroutine können hierbei während der Waschroutine an das Kraftfahrzeug übermittelt werden. Das Übermitteln der Bewegungsroutine an das Kraftfahrzeug kann somit relativ flexibel, auf verschiedene Arten erfolgen.

In weiterer vorteilhafter Ausgestaltung der Erfindung ist es vorgesehen, dass vor dem Übermitteln der Daten an die Waschanlagensteuereinheit eine Kommunikationsverbindung zwischen einer Steuereinheit des Kraftfahrzeugs und der Waschanlagensteuereinheit aufgebaut und bis zum Ende des Waschvorgangs aufrecht erhalten wird, über die zunächst eine Authentifizierungsroutine erfolgt. Es ist somit vorgesehen, dass vor dem Senden der den Waschvorgang des Kraftfahrzeugs betreffenden Daten an die Waschanlagensteuereinheit eine Verbindung zwischen der Waschanlagensteuereinheit und einer entsprechenden Steuereinheit des Kraftfahrzeugs aufgebaut wird. Diese Kommunikationsverbindung wird zudem während des gesamten Waschvorgangs des Kraftfahrzeugs beibehalten und zudem dazu genutzt, dass gleich zu Beginn des Bestehens der Kommunikationsverbindung ein vorbestimmter Ablauf zur Bestätigung der Identität des Kraftfahrzeugs und der Waschanlage durchgeführt wird.

Bei dieser Kommunikationsverbindung handelt es sich beispielsweise um eine WLAN- oder LTE-Verbindung, das heißt eine Funkverbindung. Die Authentifizierungsroutine kann beispielsweise umfassen, dass das Kraftfahrzeug mithilfe einer Frontkamera einen zur Authentifizierung der Waschanlage vorgesehenen Code am Eingang der Waschanlage erkennt und daraufhin an die Waschanlage ein entsprechendes Signal übermittelt, beispielsweise ein über eine zertifizierte Funkverbindung übertragenes Erkennungssignal. Sobald die Waschanlage dieses Erkennungssignal empfangen, mit entsprechenden hinterlegten Daten abgeglichen und somit das Kraftfahrzeug eindeutig identifiziert hat, ist die Authentifizierungsroutine abgeschlossen. Es ist zudem möglich, dass am Ende des Waschvorgangs mit einer entsprechenden Kamera der Waschanlage dokumentiert wird, in welchem Zustand das Kraftfahrzeug die Waschanlage verlässt. Anhand dieser Kameraaufnahmen ist es möglich, im Falle möglicher Streitigkeiten zwischen dem Betreiber des Kraftfahrzeugs und dem Betreiber der Waschanlage zu klären, ob und wann das Auto in welchem Zustand die Waschanlage verlassen hat. Durch die beschriebenen Maßnahmen wird der vollautonome Waschvorgang besonders sicher in Hinblick auf die Auswahl des zu waschenden Kraftfahrzeugs sowie die Qualität des Waschvorgangs, was besonders bei selbstständig, das heißt ohne Kontrolle durch einen Benutzer des Kraftfahrzeugs oder einen Mitarbeiter der Waschanlage vor Ort, durchgeführten Waschvorgängen relevant ist.

Alternativ zu der bisher beschriebenen für das Kraftfahrzeug ermittelten Bewegungsroutine, die eine Bewegung des Kraftfahrzeugs relativ zum Waschanlagenportal vorsieht, ist es möglich, dass zusätzlich die Heizung des Kraftfahrzeugs für einen Trockenprozess des Kraftfahrzeugs hinzugezogen wird und daher im Rahmen der Bewegungsroutine ebenfalls angesteuert wird. Dies würde ein besonders effizientes Trocknen des Kraftfahrzeugs ermöglichen.

Es ist zudem möglich, dass im Rahmen des Waschvorgangs, beispielsweise nach dem Waschen und Trocknen des Fahrzeugäußeren, die Türen des Kraftfahrzeugs vollautonom geöffnet werden und mithilfe von Reinigungsrobotern das Fahrzeuginnere zusätzlich zum Fahrzeugäußeren gereinigt wird, zum Beispiel mithilfe eines dafür vorgesehenen Staubsaugers. Die Bewegungsroutine kann somit auch Informationen zu einer Reinigung des Fahrzeuginneren enthalten. Hierfür werden im Rahmen der Datenübermittlung zu Beginn des Waschverfahrens Informationen über die Abmessungen und die verwendeten Materialien im Fahrzeuginneren an die Waschanlagensteuereinheit übermittelt. Dies ermöglicht eine möglichst vollständige und effiziente Reinigung des Kraftfahrzeugs durch Anwendung des Waschverfahrens.

Es ist zudem eine Waschanlage vorgesehen, welche zumindest ein Waschanlagenportal sowie eine Waschanlagensteuereinheit aufweist und dazu ausgelegt ist, ein Kraftfahrzeug gemäß dem oben beschriebenen Waschverfahren zu waschen. Es ist also eine Waschanlage vorgesehen, die wenigstens ein Portal zum Waschen eines Kraftfahrzeugs sowie eine Komponente zum Steuern der Waschanlage aufweist. Mit dieser Waschanlage ist es möglich, ein Kraftfahrzeug entsprechend dem oben beschriebenen Waschverfahren für ein Kraftfahrzeug zu reinigen, das heißt das Kraftfahrzeug zu waschen.

Es ist zudem möglich, dass die Waschanlage aus mehreren Waschanlagenportalen besteht, die beispielsweise hintereinander angeordnet sind, sodass mehrere Fahrzeuge in den einzelnen Portalen gleichzeitig gewaschen werden können. Es ist zudem möglich, dass die Waschanlage aus mehreren Portalen besteht, die unterschiedlichen Wasch- und Trockentätigkeiten vorbehalten sind. Das Wechseln zwischen diesen einzelnen Portalen würde gemäß der vorbestimmten Bewegungsroutine vollautonom vom Kraftfahrzeug durchgeführt werden. Dies ermöglicht, zeitlich betrachtet, ein besonders effektives Waschen von Kraftfahrzeugen.

Es ist zudem ein Kraftfahrzeug vorgesehen, welches dazu ausgelegt ist, ein Waschverfahren nach dem oben beschriebenen Waschverfahren für ein Kraftfahrzeug in Kombination mit einer Waschanlage, wie sie ebenfalls oben beschrieben wurde, durchzuführen. Dieses Kraftfahrzeug ist in der Lage, vollautonom zu fahren und folglich eine Bewegungsroutine, die von einer Waschanlagensteuereinheit der Waschanlage ermittelt wurde, vollautonom abzufahren.

Ein weiterer unabhängiger Aspekt der Erfindung betrifft eine Servereinrichtung, welche dazu eingerichtet ist, einen Waschauftrag für ein Kraftfahrzeug einer Fahrzeugflotte an eine Waschanlage zu übermitteln. Mithilfe dieser Servereinrichtung können mehrere Kraftfahrzeuge gesteuert werden und gezielt zur Position der Waschanlage gelenkt werden. Entweder über eine entsprechende Steuereinheit der Kraftfahrzeuge oder durch eine direkte Datenübermittlung an die Waschanlagensteuereinheit ist es zudem möglich, einen Waschauftrag für ein einzelnes Kraftfahrzeug an die Waschanlagensteuereinheit zu übermitteln. Diese Datenübermittlung zwischen Kraftfahrzeug und Server, Kraftfahrzeug und Waschanlagensteuereinheit beziehungsweise Server und Waschanlagensteuereinheit erfolgt über jeweilige Kommunikationsverbindungen und folglich über entsprechende Kommunikationsschnittstellen im Kraftfahrzeug und in der Waschanlage. Es ist zudem möglich, dass die Servereinrichtung die Waschanlage direkt darüber informiert, wann, wie viele und welche Kraftfahrzeuge von der Waschanlage gewaschen werden sollen.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

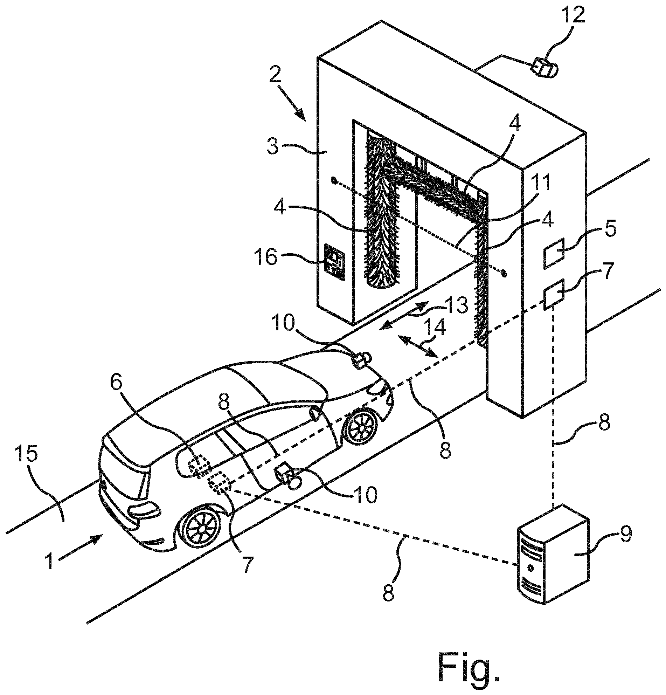

Im Folgenden ist ein Ausführungsbeispiel der Erfindung beschrieben. Hierzu zeigt die einzige Figur eine schematische Darstellung eines Kraftfahrzeugs, das sich zum Waschen in einem Waschanlagenportal einer Waschanlage befindet.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In der Figur sind funktionsgleiche Elemente jeweils mit denselben Bezugszeichen versehen.

In der einzigen Figur ist ein Kraftfahrzeug 1 skizziert, das sich vor einer Waschanlage 2 befindet, die ein Waschanlagenportal 3 aufweist. Das Waschanlagenportal 3 weist drei rotierende Bürsten 4 auf, die sich an den Seiten des Portals sowie an dessen oberer Querachse befinden. Diese rotierenden Bürsten 4 können sich auf ein Kraftfahrzeug 1, das sich in diesem Waschanlagenportal 3 befindet, zubewegen beziehungsweise sich von diesem wegbewegen und somit letztendlich das Kraftfahrzeug 1 waschen. Zusätzlich zu den rotierenden Bürsten 4 kann das Waschanlagenportal 3 noch weitere Reinigungselemente beinhalten, beispielsweise Föne zum Trocknen des Kraftfahrzeugs oder Wasserdüsen, von denen aus das Kraftfahrzeug 1 mit Wasser und gegebenenfalls mit Reinigungsmitteln bespritzt wird. Das Waschanlagenportal 3 weist zudem eine Waschanlagensteuereinheit 5 sowie eine Kommunikationsschnittstelle 7 auf.

Das Kraftfahrzeug 1, das sich vor der Waschanlage 2 befindet, weist ebenfalls eine Kommunikationsschnittstelle 7 auf sowie eine Fahrzeugsteuereinheit 6. Über die Kommunikationsschnittstelle 7 steht das Kraftfahrzeug 1 in Kontakt mit einer Servereinrichtung 9. Über diese Servereinrichtung 9, das heißt über die Kommunikationsverbindung 8 zwischen der Kommunikationsschnittstelle 7 des Kraftfahrzeugs 1 und der Servereinrichtung 9, wird dem Kraftfahrzeug 1 mitgeteilt, dass es sich für einen Waschvorgang zu der Waschanlage 2 bewegen soll. Sobald das Kraftfahrzeug 1 im Bereich der Waschanlage 2 angekommen ist, wird eine Kommunikationsverbindung 8 zwischen der Kommunikationsschnittstelle 7 des Kraftfahrzeugs 1 sowie der Kommunikationsschnittstelle 7 der Waschanlage 2, die hier als Bestandteil des Waschanlagenportals 3 skizziert wurde, aufgebaut. Die Kommunikationsverbindung 8 erfolgt über eine zertifizierte und somit abgesicherte Funkverbindung, beispielsweise über eine LTE-Verbindung oder eine WLAN-Verbindung.

Zur Authentifizierung des Kraftfahrzeugs 1 beziehungsweise zur Authentifizierung der Waschanlage 2 wird zunächst eine Authentifizierungsroutine durchgeführt. Hierfür wird mit der Kamera 10 an der Front des Kraftfahrzeugs 1 zunächst ein entsprechender Barcode 16 am Waschanlagenportal 3 erkannt. Zudem wird ein vorbestimmter Signalcode über die Kommunikationsschnittstelle 7 des Kraftfahrzeugs 1 über die Kommunikationsverbindung 8 an die Kommunikationsschnittstelle 7 der Waschanlage 2 übermittelt. Dieser übermittelte Signalcode wird daraufhin mit einem der Waschanlage 2 von der Servereinrichtung 9 über eine Kommunikationsverbindung 8 zwischen der Kommunikationsschnittstelle 7 der Waschanlage 2 und der Servereinrichtung 9 übermittelten Referenzcode überprüft.

Erst nachdem diese oder eine andere vorbestimmte Authentifizierungsroutine durchgeführt wurde, werden den Waschvorgang betreffende Daten des Kraftfahrzeugs 1 an die Waschanlagensteuereinheit 5 übermittelt. Dies erfolgt über die Kommunikationsverbindung 8 zwischen dem Kraftfahrzeug 1 und der Waschanlage 2. Diese Daten umfassen Informationen über die Abmessungen des Kraftfahrzeugs 1, Informationen zur Lackierung des Kraftfahrzeugs 1 sowie Informationen zu einem ausgewählten Waschprogram und einen gewünschten Start des Waschvorgangs.

Basierend auf diesen Daten bestimmt die Waschanlagensteuereinheit 5 eine Bewegungsroutine für das Kraftfahrzeug 1 sowie für die verschiedenen Komponenten des Waschanlagenportals 3, insbesondere für die rotierenden Bürsten 4. Bei einem Durchführen dieser Bewegungsroutine durch entsprechende Steuerung des Kraftfahrzeugs 1 sowie der Komponenten des Waschanlagenportals 3 kann das Kraftfahrzeug 1 von der Waschanlage 2 gewaschen werden.

Diese von der Waschanlagensteuereinheit 5 ermittelte Bewegungsroutine wird über die Kommunikationsverbindung 8 an die Kommunikationsschnittstelle 7 des Kraftfahrzeugs 1 und somit letztendlich an die Fahrzeugsteuereinheit 6 des Kraftfahrzeugs 1 übermittelt. Daraufhin bewegt sich das Kraftfahrzeug 1 in das Waschanlagenportal 3. Mithilfe fahrzeugeigener Sensorik, zum Beispiel mithilfe von Radargeräten 10 in der Front sowie an den Seiten des Kraftfahrzeugs 1, ermittelt das Kraftfahrzeug 1 seine Relativpositionierung zum Waschanlagenportal 3. Zudem ist in das Waschanlagenportal 3 entsprechende Sensorik, integriert, wie beispielsweise eine Lichtschranke 11, anhand der die Relativpositionierung des Kraftfahrzeugs 1 innerhalb des Waschanlagenportals 3 kontrolliert werden kann. Alternativ zu den genannten Radargeräten 10 kann das Kraftfahrzeug 1 beispielsweise über Ultraschallgeräte verfügen. Alternativ zu der genannten Lichtschranke 11 kann die Waschanlage 2 beziehungsweise das Waschanlagenportal 3 über Berührungsbügel oder entsprechende sonstige Kontaktschalter verfügen. Zudem befindet sich hinter dem Waschanlagenportal 3 eine Waschanlagenkamera 12. Mit dieser Waschanlagenkamera 12 kann der Endzustand des Kraftfahrzeugs 1 nach dessen Waschen durch die Komponenten des Waschanlagenportals 3 überprüft und dokumentiert werden.

Sobald der Waschvorgang des Kraftfahrzeugs 1 begonnen hat, wird das Kraftfahrzeug 1 vollautomatisch in Vor- und Rückwärtsbewegung 13 sowie in Querbewegung 14 relativ zu dem ortsfesten Waschanlagenportal 3 derart bewegt, dass zusammen mit den Bewegungen der rotierenden Bürsten 4 die Bewegungsroutine des Kraftfahrzeugs 1 durchgeführt wird. Das Kraftfahrzeug 1 wird also gemäß der ihm übermittelten Bewegungsroutine relativ zum Waschanlagenportal 3 vollautonom bewegt.

Während des Waschvorgangs erfolgt kontinuierlich eine Kontrolle der Relativpositionierung des Kraftfahrzeugs 1 zum Waschanlagenportal 3 mit der genannten Sensorik des Kraftfahrzeugs 1 sowie der Waschanlage 2. Werden Abweichungen, zum Beispiel durch Rutschen der Reifen des Kraftfahrzeugs 1 auf dem Boden 15 der Waschanlage 2 oder durch häufige Vor- und Rückwärtsbewegungen 13 des Kraftfahrzeugs 1, beobachtet, das heißt es wird festgestellt, dass die aktuelle Relativpositionierung nicht einer vorgegebenen Soll-Vorgabe entspricht, muss die Positionierung des Kraftfahrzeugs 1 korrigiert werden. Dieses Korrigieren der Relativpositionierung erfolgt durch entsprechendes Steuern des Kraftfahrzeugs 1 in Vor- und Rückwärtsbewegungen 13 und/oder Querbewegungen 14 durch die Fahrzeugsteuereinheit 6. Es ist jedoch auch möglich, dass durch entsprechendes Ansteuern der rotierenden Bürsten 4 des Waschanlagenportals 3 die Querpositionierung des Kraftfahrzeugs 1 beeinflusst wird, beispielsweise indem ein bestimmter Druck auf eine entsprechende Längsseite des Kraftfahrzeugs 1 durch die rotierenden Bürsten 4 ausgeübt wird und dadurch das Kraftfahrzeug 1 in Querrichtung 14 schiebt.

Die Bewegungsroutine kann dem Kraftfahrzeug 1 als eine Datei vor dem Beginn des Waschvorgangs übermittelt werden. Es ist jedoch auch möglich, dass die Bewegungsroutine in Teilbewegungsroutinen aufgeteilt wird und diese einzelnen Teilbewegungsroutinen jeweils erst vor Beginn der Durchführung der einzelnen Teilabschnitte des Waschvorgangs an das Kraftfahrzeug 1 von der Waschanlagensteuereinheit 5 über die Kommunikationsverbindung 8 übermittelt werden. Eine solche Teilbewegungsroutine könnte zum Beispiel die folgenden Daten enthalten: Vorwärtsbewegung des Kraftfahrzeugs 1 um 20 cm bis zu einer bestimmten Position innerhalb des Waschanlagenportals 3 innerhalb der nächsten fünf Sekunden, dann Halten dieser Position für weitere 20 Sekunden und anschließendes Zurückfahren des Kraftfahrzeugs 1 zur Ausgangsposition innerhalb von fünf Sekunden. Diese Teilbewegungsroutine enthält somit Positionsinformationen für die nächsten 30 Sekunden und stellt dem Kraftfahrzeug 1 Informationen über die in der unmittelbaren Zukunft anstehende Fahrzeugbewegung gemäß der Bewegungsroutine bereit. Sobald diese Teilbewegungsroutine von dem Kraftfahrzeug 1 durchgeführt wurde, übermittelt die Waschanlagensteuereinheit 5 der Fahrzeugsteuereinheit 6 über die Kommunikationsverbindung 8 und somit über die jeweiligen Kommunikationsschnittstellen 7 die darauf folgende nächste Teilbewegungsroutine für das Kraftfahrzeug 1.

Sobald der Waschvorgang des Kraftfahrzeugs 1 beendet wurde, verlässt das Kraftfahrzeug 1 die Waschanlage 2. Die Waschanlage 2 nimmt jedoch mithilfe der Waschanlagenkamera 12 den Endzustand des Kraftfahrzeugs auf und übermittelt diese Daten über die Kommunikationsverbindung 8 an die Servereinrichtung 9. Die Servereinrichtung 9 verfügt somit über Daten, die den Waschvorgang des Kraftfahrzeugs 1 in der Waschanlage 2 bestätigen.

Es ist zudem möglich, dass die Waschanlage 2 aus mehreren Waschanlagenportalen 3 besteht, die beispielsweise hintereinander angeordnet sind. Dies ermöglicht, dass mehrere Kraftfahrzeuge 1 gleichzeitig von der Waschanlage 2 gereinigt werden können. Für die Bewegungsroutinen der einzelnen Kraftfahrzeuge 1 werden dann auch die mit den entsprechenden Sensoreinheiten ermittelten Abstände zu den jeweiligen anderen Kraftfahrzeugen 1 berücksichtigt. Es ist zudem möglich, dass die einzelnen Waschanlagenportale 3 der Waschanlage 2 verschiedene Schritte des Waschvorgangs des Kraftfahrzeugs 1 abdecken. Beispielsweise könnte ein erstes Waschanlagenportal 3 lediglich zu einer Vorreinigung des Kraftfahrzeugs 1 verwendet werden. Ein zweites Waschanlagenportal 3 könnte dann eine gründlichere Zweitreinigung vornehmen und ein drittes Waschanlagenportal 3 zum Trocknen des Kraftfahrzeugs 1 verwendet werden. Es ist jedoch auch denkbar, dass mehrere identische, zum vollständigen Waschen und Trocknen eines Kraftfahrzeugs 1 ausgelegte Waschanlagenportale 3 hintereinander angeordnet sind, in denen zeitgleich mehrere Kraftfahrzeuge 1 gewaschen werden können. Es wäre zudem denkbar, das Waschanlagenportal 3 um Reinigungsroboter zu ergänzen, die nach einem von der Fahrzeugsteuereinheit 6 veranlassten Öffnen der Fenster und/oder Türen des Kraftfahrzeugs 1 eine Innenreinigung des Kraftfahrzeugs 1 gemäß einer entsprechenden Bewegungsroutine durchführen. Es ist alternativ auch denkbar, dass die Heizung des Kraftfahrzeugs 1 zur Trocknung des Kraftfahrzeugs 1 nach dem Waschen unterstützend hinzugezogen wird.

Die Servereinrichtung 9 kann zum Beispiel von einem Betreiber einer Fahrzeugflotte, einem Fahrzeughersteller oder einem externen Dienstleister bereitgestellt werden. Die Kommunikationsverbindung 8 zwischen der Servereinrichtung 9 und der Kommunikationsschnittstelle 7 der Waschanlage 2 ist fakultativ und zur Durchführung des beschriebenen Waschverfahrens für ein Kraftfahrzeug 1 nicht notwendig.

Insgesamt zeigt das Beispiel, dass mithilfe des beschriebenen Waschverfahrens für ein Kraftfahrzeug 1 eine besonders effektive und kosten- und ressourcensparsame Fahrzeugreinigung durch eine Waschanlage 2 erfolgen kann. Dies ist dabei unter anderem möglich, dass anhand der übermittelten Daten eine besonders vorteilhafte Bewegungsroutine für das Kraftfahrzeug 1 innerhalb des Waschanlagenportals 3 ermittelt wird. Das Waschanlagenportal 3 ist generell ortsfest und kann nur auf die Querbewegung 14 des Kraftfahrzeugs 1 Einfluss nehmen. Jegliche Vor- und Rückwärtsbewegung 13 des Kraftfahrzeugs 1 wird von dem Kraftfahrzeug 1, das heißt von dessen Fahrzeugsteuereinheit 6, vollautomatisch durchgeführt. Zum Durchführen eines derartigen Waschverfahrens für ein Kraftfahrzeug 1 ist es daher nicht notwendig, dass ein Fahrer des Kraftfahrzeugs 1 oder ein Operator der Waschanlage 2 vor Ort ist. Jegliche Übermittlung von Befehlen und Daten sowie jegliche Fahrzeugsteuerung 1 beziehungsweise Steuerung der Komponenten der Waschanlage 2 erfolgt vollautonom und wird lediglich durch entsprechende Befehle von einer Servereinrichtung 9 unterstützt.

### Bezugszeichenliste

- 1: Kraftfahrzeug
- 2: Waschanlage
- 3: Waschanlagenportal
- 4: rotierende Bürsten
- 5: Waschanlagensteuereinheit
- 6: Fahrzeugsteuereinheit
- 7: Kommunikationsschnittstelle
- 8: Kommunikationsverbindung
- 9: Servereinrichtung
- 10: Radargerät
- 11: Lichtschranke
- 12: Waschanlagenkamera
- 13: Vor- und Rückwärtsbewegung
- 14: Querbewegung
- 15: Boden
- 16: Barcode

## Patentansprüche

1. Waschverfahren für ein Kraftfahrzeug (1), **gekennzeichnet durch** die Schritte:
- Übermitteln von einen Waschvorgang des Kraftfahrzeugs (1) betreffenden Daten an eine Waschanlagensteuereinheit (5) einer Waschanlage (2) mit zumindest einem Waschanlagenportal (3);
- Ermitteln einer Bewegungsroutine für das Kraftfahrzeug (1) basierend auf den übermittelten Daten, wobei die Bewegungsroutine zumindest Vor- und/oder Rückwärtsbewegungen (13) des Kraftfahrzeugs (1) relativ zu der Waschanlage (2) für den Waschvorgang umfasst;
- Durchführen des Waschvorgangs, indem das Kraftfahrzeug (1) die ermittelte Bewegungsroutine automatisch ausführt und die Waschanlage (2) abgestimmt auf die Bewegungsroutine das Kraftfahrzeug (1) mittels des Waschanlagenportals (3) wäscht.

2. Waschverfahren nach Anspruch 1,
**dadurch gekennzeichnet, dass**
während der Durchführung des Waschvorgangs das Waschanlagenportal (3) ortsfest verbleibt.

3. Waschverfahren nach einem der vorhergehenden Ansprüche,
**dadurch gekennzeichnet, dass**
während der Durchführung des Waschvorgangs anhand von Sensordaten des Kraftfahrzeugs (1) und/oder anhand von Sensordaten der Waschanlage (2) eine Relativpositionierung des Kraftfahrzeugs (1) zum Waschanlagenportal (3) überprüft wird.

4. Waschverfahren nach Anspruch 3,
**dadurch gekennzeichnet, dass**
die Relativpositionierung durch eine Längs- und/oder Quersteuerung des Kraftfahrzeugs (1) automatisch korrigiert wird, falls die Relativpositionierung des Kraftfahrzeugs (1) von einer Soll-Vorgabe abweicht.

5. Waschverfahren nach Anspruch 3 oder 4,
**dadurch gekennzeichnet, dass**
die Relativpositionierung in Querrichtung mittels einer Komponente des Waschanlagenportals (3) korrigiert wird, falls die Relativpositionierung des Kraftfahrzeugs (1) von der Soll-Vorgabe abweicht.

6. Waschverfahren nach einem der vorhergehenden Ansprüche,
**dadurch gekennzeichnet, dass**
die übermittelten Daten wenigstens eine der folgenden Informationen umfassen:
- Abmessungen des Kraftfahrzeug (1);
- Informationen zur Lackierung des Kraftfahrzeugs (1);
- Informationen zu einem ausgewählten Waschprogramm;
- Informationen zu einem gewünschten Start des Vorgangs.

7. Waschverfahren nach einem der vorhergehenden Ansprüche,
**dadurch gekennzeichnet, dass**
die ermittelte Bewegungsroutine in Teilbewegungsroutinen aufgeteilt wird und die jeweiligen Teilbewegungsroutinen erst vor Beginn der Durchführung des entsprechenden jeweiligen Teilabschnitts des Waschvorgangs an das Kraftfahrzeug (1) übermittelt werden.

8. Waschverfahren nach einem der vorhergehenden Ansprüche,
**dadurch gekennzeichnet, dass**
vor dem Übermitteln der Daten an die Waschanlagensteuereinheit (5) eine Kommunikationsverbindung (8) zwischen einer Steuereinheit (7) des Kraftfahrzeugs und der Waschanlagensteuereinheit (5) aufgebaut und bis zum Ende des Waschvorgangs aufrechterhalten wird, über die zunächst eine Authentifizierungsroutine erfolgt.

## Claims

1. Washing method for a motor vehicle (1), **characterized by** the steps of:
- transmitting data relating to a washing process for the motor vehicle (1) to a washing installation control unit (5) of a washing installation (2) having at least one washing installation portal (3);
- ascertaining a movement routine for the motor vehicle (1) based on the transmitted data, wherein the movement routine comprises at least forward and/or backward movements (13) of the motor vehicle (1) relative to the washing installation (2) for the washing process;
- carrying out the washing process by way of the motor vehicle (1) automatically executing the ascertained movement routine and the washing installation (2) washing the motor vehicle (1) by means of the washing installation portal (3) in a manner matched to the movement routine.

2. Washing method according to Claim 1,
**characterized in that**
the washing installation portal (3) remains stationary while the washing process is being carried out.

3. Washing method according to either of the preceding claims,
**characterized in that**
a relative positioning of the motor vehicle (1) with respect to the washing installation portal (3) is checked on the basis of sensor data relating to the motor vehicle (1) and/or on the basis of sensor data relating to the washing installation (2) while the washing process is being carried out.

4. Washing method according to Claim 3,
**characterized in that**
the relative positioning is automatically corrected by longitudinal and/or lateral control of the motor vehicle (1) if the relative positioning of the motor vehicle (1) deviates from a prespecified target.

5. Washing method according to Claim 3 or 4,
**characterized in that**
the relative positioning in the lateral direction is corrected by means of a component of the washing installation portal (3) if the relative positioning of the motor vehicle (1) deviates from the prespecified target.

6. Washing method according to one of the preceding claims,
**characterized in that**
the transmitted data comprises at least one of the following items of information:
- dimensions of the motor vehicle (1);
- information relating to the paintwork of the motor vehicle (1);
- information relating to a selected washing programme;
- information relating to a desired start of the process.

7. Washing method according to one of the preceding claims,
**characterized in that**
the ascertained movement routine is divided into partial movement routines and the respective partial movement routines are transmitted to the motor vehicle (1) only before the corresponding respective portion of the washing process is started to be carried out.

8. Washing method according to one of the preceding claims,
**characterized in that**,
before the data is transmitted to the washing installation control unit (5), a communication link (8) is established between a control unit (7) of the motor vehicle and the washing installation control unit (5) and is maintained until the end of the washing process, an authentication routine initially being performed via said communication link.

## Revendications

1. Procédé de lavage pour un véhicule automobile (1), **caractérisé par** les étapes consistant à :
- transmettre des données concernant un processus de lavage du véhicule automobile (1) à une unité de commande d'installation de lavage (5) d'une installation de lavage (2) dotée d'au moins un portique d'installation de lavage (3) ;
- déterminer une routine de déplacement pour le véhicule automobile (1) sur la base des données transmises, la routine de déplacement comprenant au moins des déplacements en avant et/ou en arrière (13) du véhicule automobile (1) par rapport à l'installation de lavage (2) pour le processus de lavage ;
- exécuter le processus de lavage en ce que le véhicule automobile (1) effectue automatiquement la routine de déplacement déterminée, et l'installation de lavage (2) lave le véhicule automobile (1) en fonction de la routine de déplacement au moyen du portique d'installation de lavage (3).

2. Procédé de lavage selon la revendication 1, **caractérisé en ce que** le portique d'installation de lavage (3) reste stationnaire pendant l'exécution du processus de lavage.

3. Procédé de lavage selon l'une quelconque des revendications précédentes, **caractérisé en ce qu'**un positionnement relatif du véhicule automobile (1) par rapport au portique d'installation de lavage (3) est vérifié pendant l'exécution du processus de lavage à l'aide de données de capteur du véhicule automobile (1) et/ou à l'aide de données de capteur de l'installation de lavage (2).

4. Procédé de lavage selon la revendication 3, **caractérisé en ce que** le positionnement relatif est corrigé automatiquement par une commande longitudinale et/ou transversale du véhicule automobile (1) si le positionnement relatif du véhicule automobile (1) s'écarte d'une spécification de consigne.

5. Procédé de lavage selon la revendication 3 ou 4, **caractérisé en ce que** le positionnement relatif dans la direction transversale est corrigé au moyen d'un composant du portique d'installation de lavage (3) si le positionnement relatif du véhicule automobile (1) s'écarte de la spécification de consigne.

6. Procédé de lavage selon l'une quelconque des revendications précédentes, **caractérisé en ce que** les données transmises comprennent au moins l'une des informations suivantes :
- les dimensions du véhicule automobile (1) ;
- des informations concernant la peinture du véhicule automobile (1) ;
- des informations concernant un programme de lavage sélectionné ;
- des informations concernant un démarrage souhaité du processus.

7. Procédé de lavage selon l'une quelconque des revendications précédentes, **caractérisé en ce que** la routine de déplacement déterminée est divisée en routines de déplacement partielles, et les routines de déplacement partielles respectives ne sont transmises au véhicule automobile (1) qu'avant le début de l'exécution de la section respective correspondante du processus de lavage.

8. Procédé de lavage selon l'une quelconque des revendications précédentes, **caractérisé en ce qu'**avant la transmission des données à l'unité de commande d'installation de lavage (5), une liaison de communication (8) entre une unité de commande (7) du véhicule automobile et l'unité de commande d'installation de lavage (5) est établie et est maintenue jusqu'à la fin du processus de lavage, par laquelle une routine d'authentification est effectuée d'abord.
